# EUROPEAN PATENT APPLICATION

(11) **EP 2 461 564 A1**
(43) Date of publication of application: **06.06.2012**
(21) Application number: 11160417.9
(22) Date of filing: 30.03.2011
(51) Int. Cl.: H04N 5/00, H04N 7/16, H04N 7/167, H04L 9/08, H04L 9/32, H04N 21/4623, H04N 21/6334, H04N 21/266, H04L 29/06

(54) **Key transport protocol**

(30) Priority: 01.12.2010 EP 10193312
(71) Applicant: IRDETO B.V., 2132 LS Hoofddorp (NL)
(72) Inventor: Roelse, Petrus Lambertus Adrianus, 2132 LS, Hoofddorp (NL)
(74) Representative: Pelly, Jason Charles

(57) **Abstract**

The invention enables the transport of a key from a sender to a receiver. The sender comprises means for generating or obtaining a virtual key and securing the virtual key to protect its authenticity and confidentiality. The secured virtual key is provided to the receiver. The receiver comprises means to derive the virtual key from the secured virtual key. The sender and the receiver comprise means to provide the virtual key and a signature verification key associated with the sender as inputs to a cryptographic function to generate an output. The output includes at least one key. The at least one key may be in turn used as input to a cryptographic mechanism, providing a service to a security application. Examples of such services are encryption or decryption of content, or generating a response to a challenge.

## Description

### FIELD OF THE INVENTION

The present disclosure relates to a key transport protocol for establishing a shared secret key between a sender and a receiver with the use of a trusted party. In particular, though not necessarily, this disclosure relates to methods for transporting the shared secret key from a sender to the receiver, a sender, a receiver, a key transport system, and a computer program product using such method(s).

### BACKGROUND

A key transport protocol provides a shared secret between two or more parties. The shared secret can be used for a variety of purposes. For example, the shared secret can be used as a symmetric key for encrypting or decrypting data. Other examples are to use the shared secret as a seed for a pseudo-random number generator, or to use the shared secret as a key for a keyed hash function. In particular, such cryptographic operations/primitives can be used as building blocks for a challenge-response protocol, which can be used to bind software to hardware (also referred to as "node-locking"), as detailed later.

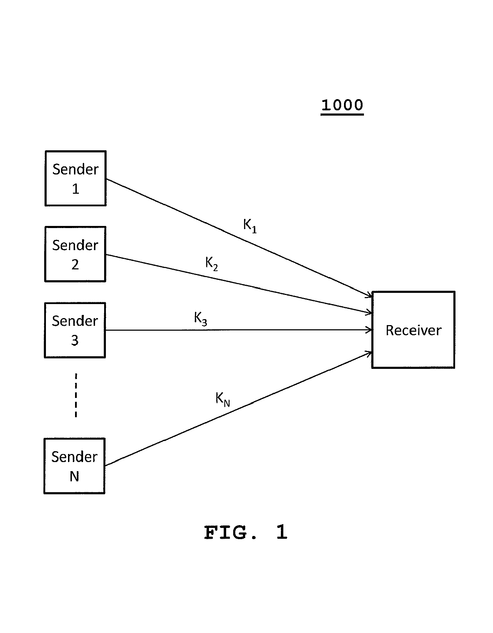

A key transport protocol is a technique in which one party, referred to as "the sender", generates or obtains a secret key, and distributes this key to another party, referred to as "the receiver". This setting is depicted as system **1000** in **FIG. 1****.** In **FIG. 1****,** Kᵢ denotes a secret key generated or obtained by Sender i and distributed to the receiver. Without loss of generality, only one receiver is depicted in **FIG. 1****.** In general, any number of senders and any number of receivers can be used in a system that implements a key transport protocol, and senders and receivers may join or leave the system.

In the following discussion, no trust relation is assumed to exist between any pair of senders. This implies that no secret(s) shall be shared between any pair of senders. Furthermore, a receiver that implements a specified key transport protocol to derive a shared key Kᵢ is referred to as a compliant receiver. Security requirements for the key transport protocol are:
1. The confidentiality of Kᵢ shall be protected,
2. The authenticity of Kᵢ shall be protected, in the sense that a compliant receiver can only derive a given Kᵢ generated by Sender i if the corresponding message (or more than one message) required to derive Kᵢ is generated by Sender i.

For establishing the keying relationships between the senders and the receivers, it is assumed that a trusted party is available. The trusted party is responsible for the personalization of a receiver. Personalization may include the generation of a secret cryptographic key, and distributing this key to the receiver using a confidential and authentic channel between the trusted party and the receiver. Such a key is also referred to as a secret master key (or master key) of the receiver in this disclosure. It is good practice to uniquely generate a secret master key for every receiver. This ensures that the security of the system can "fail gracefully"; in other words, this allows for a system design in which the compromise of a secret master key of a receiver can be corrected without the need to replace other receivers. In some cases, it is preferable that a receiver generates its secret master key. For example, if the secret master key is part of an asymmetric key pair, then the secret key can be stored by the receiver, and the associated public key can be distributed to the trusted party during the personalization phase of the receiver, using an authentic channel between the receiver and the trusted party. In such a scheme measures can be implemented that prevent the trusted party from knowing the value of the secret master key of the receiver. The schemes described in this disclosure assume without loss of generality that the trusted party uniquely generates a secret master key for every receiver, and that the trusted party loads the secret master key into the receiver. However, it is understood that a receiver may generate its secret master key, and that any number of receivers may share the same secret master key. Personalization of a receiver may also include the loading of a public key associated with an asymmetric cryptographic scheme into a receiver (or receivers), e.g., used to verify digital signatures.

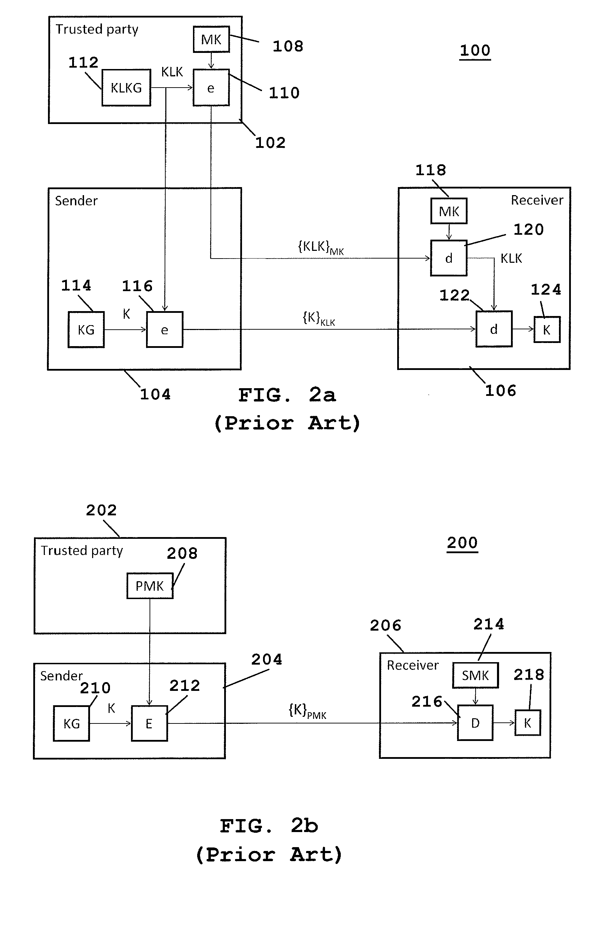

To achieve the security objectives without the need for sharing a secret between senders, a scheme based on symmetric cryptographic techniques may be used. Typically, as illustrated in **FIG. 2a****,** system **100** includes trusted party **102,** sender **104** and receiver **106.** Trusted party **102** is communicably connected to sender **104.** The trusted party may be communicably connected to receiver **106** during the personalization phase such that a symmetric master key MK can be distributed to receiver **106,** and securely stored in element **118.** Sender **104** is communicably connected to receiver **106.** As depicted in **FIG. 2a****,** if a new sender joins the system, trusted party **102** can generate a key loading key KLK using KLK generator **112** (KLKG). Next, trusted party **102** can encrypt KLK using symmetric encryption algorithm e **110** and master key MK **108** of receiver **106** to produce a corresponding ciphertext, denoted by {KLK}_{MK}. KLK and {KLK}_{MK} are then distributed to the new sender (i.e., sender **104),** using a confidential and authentic channel between trusted party **102** and sender **104.** If sender **104** wishes to distribute a secret key K to receiver **106,** it generates K using key generator **114** (KG), and encrypts K using KLK and encryption algorithm e **116** to produce the message {K}_{KLK}. Next, the messages {KLK}_{MK} and {K}_{KLK} are sent to receiver **106.** After receiving the messages, the receiver can decrypt {KLK}_{MK} using MK and decryption algorithm d **120** to produce KLK. Finally, using KLK and decryption algorithm d **122,** the receiver can decrypt {K}_{KLK} to produce K (as stored in element **124**).

The symmetric solution shown as system **100** in **FIG. 2a** satisfies the security requirements under the assumption that an adversary cannot be one of the senders in the system. To see that the second requirement is satisfied, observe that an adversary will only be able to construct a message that will load a given K, e.g., after it is compromised from a receiver, into another compliant receiver if the master key or one of the key loading keys (associated with any of the senders) of the other receiver is known (i.e., compromised or disclosed). A drawback of the scheme is that trusted party **102** needs to perform cryptographic operations using secret keys of receivers if a new sender joins the system. That is, trusted party **102** needs to manage secrets associated with receivers after the personalization phase of receivers is finished.

Instead of using a symmetric key as a master key for the receiver, the trusted party may also generate an asymmetric key pair, consisting of a secret master key SMK and a public master key PMK, for each receiver. Next, the secret master key SMK is distributed to the receiver during the personalization phase. Throughout this disclosure, the secret master key SMK may be referred to as the secret key associated with the receiver, and the public master key may be referred to as the public key associated with the receiver.

Typically, as illustrated in **FIG. 2b****,** system **200** comprises trusted party **202,** sender **204** and receiver **206.** Trusted party **202** is communicably connected to sender **204** such that public master key PMK **208** can be provided to sender **204.** The trusted party may be communicably connected to receiver **206** during the personalization phase such that the secret master key SMK can be distributed to receiver **206,** and securely stored in element **214.** Sender **204** is communicably connected to receiver **206.**

After the personalization phase, the secret master key can be deleted from the system of the trusted party. If a new sender (e.g., sender **204**) joins the system, public key PMK **208** associated with a particular receiver can be distributed to the sender using an authentic channel between the trusted party and the sender. As a consequence, all senders will have access to PMK **208.** If a sender (e.g., sender **204**) wishes to distribute a key K to a receiver, the sender can generate the key K using key generator **210,** encrypt this key with the corresponding PMK **208** (i.e., the public key associated with the receiver) and encryption algorithm E **212** to produce the message {K}_{PMK}, and send this message to receiver **206**. After receiving the message, receiver **206** can decrypt {K}_{PMK} using SMK **214** and decryption algorithm D **216** to produce K (stored in element **218**).

The benefit of the public-key solution depicted as system **200** in **Fig. 2b** is that the trusted party no longer needs to manage any secrets after the personalization of a receiver is performed. However, as PMK **208** is a public key, it is also available to an adversary. In particular, an adversary can use a PMK to distribute a given key K to the receiver associated with that PMK, e.g., after a key K is compromised from another receiver. That is, this method does not protect the authenticity of K, as defined in the second security requirement.

A second, independent mechanism for protecting the authenticity of a key K distributed to a receiver may be added to the public-key solution (shown as system **200** in **Fig. 2b**) to satisfy the second security requirement (under the assumption that an adversary cannot be one of the senders in the system). For instance, a message authentication code (MAC) can be used to protect the authenticity of a message {K}_{PMK}. A MAC is a symmetric cryptographic technique. A method similar to the scheme depicted as system **100** in **FIG. 2a** can therefore be used to establish a shared secret key for generating and verifying a MAC value. The difference is that K is replaced with a key K_{MAC}. The shared secret K_{MAC} is used for protecting the authenticity of a message {K}_{PMK}. In other words, the sender uses K_{MAC} as a key to generate a MAC value of a message {K}_{PMK} in system **200** in **FIG. 2****b.** The computed MAC value can be appended to the message. After receiving the message and the MAC value, the receiver uses K_{MAC} to verify the MAC value. Alternatively, a method based on public-key cryptography (i.e., an asymmetric digital signature) can be used for protecting the authenticity of a message {K}_{PMK}. In such a solution, the trusted party loads a public key associated with a digital signature scheme into the receiver during the personalization phase. This public key can be used as a root key of an authenticity mechanism. The receiver can use the authenticity mechanism to verify the authenticity of a message {K}_{PMK}. However, observe that the trusted party needs to manage the associated secret (root) key, as no secret keys shall be shared between senders. This implies that for both solutions (symmetric MAC and asymmetric digital signature), trusted party **202** needs to manage a secret associated with the receiver after the personalization phase of the receiver is finished, as in the symmetric solution depicted in **FIG. 2a****.**

There is a need for an improved key transport protocol that solves the problems described above. That is, there is a need for a key transport protocol with the following properties: (i) the confidentiality and the authenticity of the shared secret key are protected (as in the security requirements; preferably, the second security requirement is also satisfied if the secrets associated with one or more of the other senders are known to the adversary, or if the adversary is one of the senders), (ii) senders can use the protocol independently without the need to share a secret key, and (iii) after the personalization of a receiver, the trusted party no longer needs to manage any secret keys associated with the receiver.

### SUMMARY OF THE INVENTION

The scheme presented in this disclosure solves the problems associated with the schemes described above by combining a public-key mechanism to protect the confidentiality of a key K with a cryptographic mechanism to protect the authenticity of a second, independent key. This second key is part of a key pair which can be used to protect the authenticity of a key K as defined in the second security requirement.

More precisely, a pseudo-random value is generated (referred to as a "virtual key"). However, instead of using this virtual key directly as the value of K, a function is applied to this virtual key and a root key of the authenticity mechanism. The output of this function includes the key K. The function is chosen in such a way that the authenticity of the root key is protected; in the sense that a given K cannot be loaded into a compliant receiver if the root key is not authentic. The function may be any cryptographic function with properties that protect the authenticity of the root key.

The key being transported using the improved methods described herein may be a symmetric key associated with a block cipher or a stream cipher, used in any suitable security application or cryptographic operation (wherever a keying relationship is needed). For example, such a symmetric key and cipher can be used to encrypt and decrypt data transmitted from a sender to a receiver. Another example is to use the key being transported as a seed to initialize a pseudo-random number generator. For instance, a pseudo-random number generator may be used to generate a key pair associated with a public-key cryptosystem. The public key (or secret key) of this key pair can be used to encrypt (or decrypt) data. In some cases, the key can be used for a keyed hash function. For example, the key may be used to generate a MAC (e.g., a cipher block chaining MAC (CBC-MAC), or a hash-based MAC (HMAC)). In particular, all these cryptographic primitives can be used as building blocks for implementing a challenge-response protocol with a receiver, which may be used to authenticate the receiver (e.g., for binding a software application to the receiver). In general, the key being transported may be used for any suitable cryptographic primitives used as building blocks for a cryptographic mechanism/operation in a security application, e.g., to protect data, content, software applications, etc. It is appreciated that the key being transported may be any shared secret that is used in a security application, where said security application requires the shared secret to be transported from one party to another party.

In general, key transport occurs between a sender and a receiver. The sender has an association with a key pair: a signature key and a signature verification key. The receiver has an association with another key pair, a public key and a secret key. The key pairs may be generated using any suitable, known key generation algorithms or programs. In some embodiments, a receiver is a party to which a key is transported. The receiver may include a module that is communicably connected to a receiving device. In some cases, the module is at least part of the receiving device. This module and suitable modules therein are configured to perform at least parts of the disclosed key transport protocol.

An illustrative method for obtaining one or more keys in a receiver is disclosed. The receiver may be communicably connected to a sender. A signature verification key associated with the sender and a key loading message are received from the sender at the receiver. For instance, a signature verification key or a key loading message may be received via the Internet as part of an IP packet, preferably at a communication module (e.g., Ethernet card) configured to communicate with the sender.

The key loading message may include, among other things, a secured virtual key secured by the sender to protect authenticity and confidentiality of a virtual key. In one instance, the sender may protect the authenticity of the virtual key using a signature (e.g., a MAC or an asymmetric signature) created by known cryptographic methods, such that the signature can be verified by another party to assure that the virtual key came from an authentic sender. For example, the sender uses the signature key associated with the sender to generate a signature of the virtual key. In another instance, the sender may protect the confidentiality of the virtual key using encryption by known cryptographic methods. For example, the sender uses the public key associated with the receiver to encrypt the virtual key.

From the received secured virtual key, the virtual key is obtained, by a security module, using a secret key associated with the receiver and the signature verification key associated with the sender. For example, a cryptographic module uses the secret key associated with the receiver to perform decryption and uses the signature verification key associated with the sender to verify a signature.

After the virtual key is obtained, the virtual key and the signature verification key associated with the sender are provided as inputs to a cryptographic function to produce a given output. The given output includes the one or more keys. The cryptographic function has the property that it is infeasible to determine another virtual key and a key pair including a signature key and a signature verification key associated with the signature key, such that the determined signature verification key and the other virtual key map to the given output of the cryptographic function, the given output including the one or more keys. The cryptographic function may be a hash function having the described desired properties and functionality. In certain embodiments, it may be preferred or required that the property of the cryptographic function holds independently for parts of its output. For example, if the output includes more than one key, it may be required that the property holds independently for each key in the output.

In some embodiments, the secured virtual key includes the virtual key secured by an encryption of the virtual key using a public key associated with the receiver and a signature of the virtual key using a signature key corresponding to the signature verification key associated with the sender, such that the secured virtual key is decryptable by the receiver using the secret key corresponding to the public key associated with the receiver and that the signature of the virtual key is verifiable by the receiver using the signature verification key associated with the sender.

In some embodiments, at least part of the one or more keys in the given output of the cryptographic function is used in a challenge-response mechanism. For example, the receiver may use the one or more keys as input to a cryptographic mechanism that generates a response to a challenge. In particular, such a mechanism can be used to authenticate the receiver. Any of the disclosed cryptographic mechanisms or equivalents thereof that use at least part of the one or more keys as input may be considered as part of a challenge-response mechanism.

In some embodiments, at least part of the one or more keys is used in a challenge-response mechanism to activate a functionality associated with a software application, and at least part of the challenge-response mechanism is integrated with the software application. For example, the software may be able to verify the correctness of a received response. In certain embodiments, the computation of the response may be an essential part of the functionality of the software application. For example, the challenge may include encrypted content, and the response may include the corresponding plaintext content, to be rendered by the receiving device.

In some embodiments, the received secured virtual key, the signature verification key associated with the sender and the software application are stored in non-volatile memory of the receiver.

While not preferred, more than one receiver may share the same public/secret key pair. In some embodiments, the secret key associated with the receiver is unique to the receiver. Using a key generator, the key pair may be uniquely generated for a particular receiver. In certain embodiments, the receiver generates the key pair, and distributes the public key to a trusted party during the personalization of the receiver. In such embodiments, measures can be implemented that prevent the trusted party from knowing the value of the secret key.

In some embodiments, a method for transporting one or more keys from a sender to a receiver is disclosed. Said receiver is communicably connected to the sender. A virtual key is determined (i.e., obtained or generated) in the sender, for instance, using a key module in the sender. The virtual key may have been already been pre-generated by a key (pseudo-random number) generator, which means that determining the virtual key comprises retrieving the virtual key from memory. In certain cases, the virtual key may be generated by a key generator in the sender, which means that determining the virtual key comprises generating the virtual key using a key generator.

The virtual key is secured to produce a secured virtual key using a public key associated with the receiver and a signature key associated with the sender such that authenticity and confidentiality of the virtual key are protected. In one instance, an encryption of the virtual key (e.g., using the public key associated with the receiver) is used to protect the confidentiality of the virtual key. In another instance, a signature of the virtual key is generated using the signature key associated with the sender to protect the authenticity of the virtual key (i.e., the signature enables a receiver to verify the authenticity of the virtual key).

A signature verification key corresponding to the signature key associated with the sender and a key loading message are transported from the sender to the receiver. The key loading message includes the secured virtual key. In preferred embodiments, the key loading message is associated with the signature verification key.

The virtual key and the signature verification key associated with the sender are provided as inputs to a cryptographic function to produce a given output. The given output includes the one or more keys. The cryptographic function has the property that it is infeasible to determine another virtual key and a key pair including a signature key and a signature verification key associated with the signature key, such that the determined signature verification key and the other virtual key map to the given output of the cryptographic function, the given output including the one or more keys. For example, a hash function having the described desired properties and functionality may be used.

In some embodiments, at least part of the one or more keys is used to generate at least part of a challenge-response mechanism. At least part of the challenge-response mechanism is integrated into a software application. For example, the software may be able to verify the correctness of a received response. In certain embodiments, the computation of the response may be an essential part of the functionality of the software application. For example, the challenge may include encrypted content, and the response may include the corresponding plaintext content, to be rendered by the receiving device.

In some embodiments, the signature key associated with the sender, the signature verification key corresponding to the signature key associated with the sender and the virtual key are stored in non-volatile memory in the sender. The software application is associated with the signature key associated with the sender, the signature verification key corresponding to the signature key associated with the sender and the virtual key. This association enables the storage of: (1) the signature key associated with the sender, (2) the signature verification key corresponding to the signature key, (3) the virtual key, and (4) the association with the software application. This enables a sender to generate a new key loading message on-demand for a particular receiver authorized to execute that software application.

In some embodiments, securing the virtual key comprises encrypting the virtual key with the public key associated with the receiver to produce an encrypted virtual key, and signing the encrypted virtual key with the signature key associated with the sender to produce a signature. The encrypted virtual key is decryptable (i.e., can be decrypted) by the receiver using a secret key corresponding to the public key associated with the receiver and the signature is verifiable by the receiver using the signature verification key corresponding to the signature key associated with the sender.

A module for obtaining one or more keys in a receiver communicably connected to a sender is disclosed. The module may include a communication module, a security module, and a cryptographic module. A communication module is configured to receive a signature verification key associated with the sender and a key loading message from the sender to the receiver, wherein the key loading message includes a secured virtual key secured by the sender to protect authenticity and confidentiality of a virtual key. A security module is configured to obtain the virtual key from the received secured virtual key using a secret key associated with the receiver and the signature verification key associated with the sender. A cryptographic module is configured to provide the virtual key and the signature verification key associated with the sender as inputs to a cryptographic function in the cryptographic module to produce a given output, the given output including the one or more keys. The cryptographic function has the property that it is infeasible to determine another virtual key and a key pair including a signature key and a signature verification key associated with the signature key, such that the determined signature verification key and the other virtual key map to the given output of the cryptographic function, the given output including the one or more keys.

In some embodiments, the module is implemented as part of a single integrated circuit. This preferred implementation makes it harder for an attacker to read or modify values stored or generated inside the module.

A sender for enabling transport of one or more keys to a receiver is disclosed. Said receiver is communicably connected to the sender. The sender comprises a key module, a security module, a communication module, and a cryptographic module. A key module is configured to determine a virtual key. A security module is configured to secure the virtual key using a public key associated with the receiver and a signature key associated with the sender to produce a secured virtual key such that authenticity and confidentiality of the virtual key are protected. A communication module is configured to transmit a signature verification key corresponding to the signature key associated with the sender and a key loading message from the sender to the receiver, wherein the key loading message includes the secured virtual key. A cryptographic module is configured to provide the virtual key and the signature verification key associated with the sender as inputs to a cryptographic function in the cryptographic module to produce a given output, the given output including the one or more keys. The cryptographic function has the property that it is infeasible to determine another virtual key and a key pair including a signature key and a signature verification key associated with the signature key, such that the determined signature verification key and the other virtual key map to the given output of the cryptographic function, the given output including the one or more keys.

A key transport system comprising a module of the receiver communicably connected to a sender is also disclosed.

As discussed above, the one or more keys generated may be used to secure a software application, e.g., by means of a challenge-response mechanism. Such a computer program product being protected by the challenge-response mechanism is disclosed. The computer program product, when being executed by a processor of the receiver, is adapted to carry out a challenge-response verification mechanism to activate a functionality associated with the computer program product. The receiver comprises a challenge-response generation mechanism capable of receiving a challenge and generating a response verifiable by the challenge-response verification mechanism in the computer program product. The challenge-response generation mechanism in the receiver requires use of one or more keys. The one or more keys are at least part of a given output from a cryptographic function in the receiver. Said cryptographic function has a virtual key and a signature verification key associated with the sender as inputs and has the property that it is infeasible to determine another virtual key and a key pair including a signature key and a signature verification key associated with the signature key, such that the determined signature verification key and the other virtual key map to the given output of the cryptographic function. The virtual key is obtainable from a secured virtual key in a key loading message using a secret key associated with the receiver and the signature verification key associated with the sender.

In some embodiments, the virtual key is secured by an encryption of the virtual key using a public key associated with the receiver and a signature of the virtual key using a signature key corresponding to the signature verification key associated with the sender, such that the secured virtual key is decryptable by the receiver using the secret key corresponding to the public key associated with the receiver and that the signature of the virtual key is verifiable by the receiver using the signature verification key associated with the sender.

Hereinafter, embodiments of the invention will be described in further detail. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims. It should be appreciated, that the embodiments disclosed may not be construed as limiting the scope of protection for the present invention.

### BRIEF DESCRIPTION OF THE DRAWINGS

Aspects of the invention will be explained in greater detail by reference to exemplary embodiments shown in the drawings, in which:
**FIG. 1** shows a typical sender-receiver system using a key transport protocol (a shared key between Sender i and the receiver is denoted as Kᵢ).
**FIGS. 2a****-b** shows prior art systems using symmetric and asymmetric algorithms for transporting a secret key K.
**FIG. 3** shows a sender-receiver networked system of an exemplary embodiment of the disclosure.
**FIG. 4** shows an exemplary system for transporting a key from a sender to a receiver.
**FIG. 5** shows an exemplary receiver for receiving a key from a sender.
**FIG. 6** shows an exemplary sender for transmitting a key to a receiver.

### DETAILED DESCRIPTION OF THE DRAWINGS

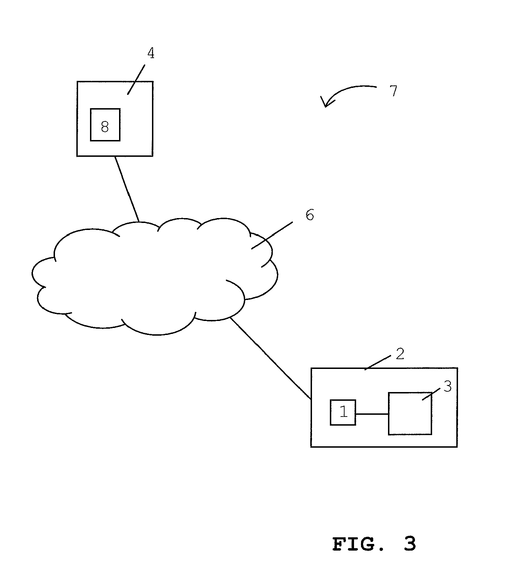

The systems and methods described in the disclosure protect the confidentiality and the authenticity (or single source authenticity) of a key that is transported from a sender to a receiver. **FIG. 3** shows a networked system including a sender and a receiver in accordance with an exemplary embodiment of the disclosure. Sender **4** transmits data to one or more receivers **2** via distribution network **6.**

In some embodiments, receiver **2** represents a party involved in a receiver-sender communication scheme configured to receive data. In some other embodiments, receiver **2** may represent a device or system of devices configured to receive data from a sender. Similarly, sender **4** may represent a party involved in a receiver-sender communication scheme, configured to transmit data to receiver(s). Sender **4** may also represent a device or system of devices configured to transmit data to receiver(s).

In some embodiments, receiver **2** may comprise a receiving device **3.** For example, receiver **2** may represent a party, and receiving device **3** may be a personal computer device, a mobile device, or a smart card device.

In some embodiments, receivers like receiver **2** may comprise module **1** (e.g., a chip, an integrated circuit). In general, receiver **2** receives and forwards data to module **1** for further processing. Module **1** uses this data to derive a shared key (or more than one key), and uses the key in a cryptographic mechanism to provide a service to receiver **2** or receiving device **3.** Examples of such services are encryption or decryption of content, or generating a response to a challenge (e.g., to authenticate receiver **2** or receiving device **3).** In certain embodiments, module **1** may be at least partly implemented in software. For example, module **1** may comprise of an integrated circuit and embedded software.

Module **1** may be connected, removably connected and/or communicably connected to receiving device **3**. In some embodiments, at least part of module **1** is implemented physically inside receiving device **3.** For example, module **1** may be integrated in an existing component of a personal computer device or a mobile device (e.g., in a circuit board of such a device), or in a smart card device (e.g., in a smart card integrated circuit). In some other embodiments, module **1** is at least in part implemented physically outside of receiving device **3.** In those embodiments, the module (e.g., integrated in a Universal Serial Bus device, a smart card device, or any other external device) may be connected physically to a port of receiving device **3.**

The security objective for module **1** is that it shall be "difficult" for an adversary to emulate module **1.** In some embodiments, integrating module **1** inside a single integrated circuit or chip may be sufficient to achieve this objective. In some other embodiments, additional security measures may be implemented (e.g., measures to increase the module's level of resistance against reading and tampering) to achieve the security objective. For instance, one or more measures commonly used to protect smart card integrated circuits may be required to achieve the objective. In yet some other embodiments, the module may be implemented inside a smart card integrated circuit to achieve the objective.

In general, a sender first generates a virtual key (denoted as K* in this disclosure). Second, the sender secures the virtual key to protect the virtual key's authenticity and confidentiality, thereby producing a secured virtual key. The virtual key may be encrypted using a public key associated with the receiver. The secured virtual key may be created by adding a signature using a signature key associated with the sender. The secured virtual key (included in a key loading message) and a signature verification key are then distributed from the sender to the receiver.

The virtual key K* generated by the sender and the signature verification key associated with the sender are used as inputs to a cryptographic function to produce an output. Said output includes a key K (or more than one key), which may be used in part as input to a cryptographic mechanism, providing a service to a security application. Examples of such services are encryption or decryption of content, or generating a response to a challenge.

Since the secured virtual key and the signature verification key are what is being transmitted from the sender to the receiver (and not the key K itself), it is an object of the receiver to derive the key K from the secured virtual key and the signature verification key. Similarly, the sender derives key K from the virtual key and the signature verification key, such that the key K may be used for the intended security application of the system.

After receiving the key loading message and the signature verification key from the sender, the receiver first derives the virtual key. For example, the receiver may use the signature verification key associated with the sender to verify the authenticity of the secured virtual key. The receiver may use a secret master key associated with the receiver (which corresponds to a public master key associated with the receiver as part of a key pair) to derive the virtual key K* from the secured virtual key.

The derived virtual key K* and the signature verification key associated with the sender are then used as inputs to a cryptographic function to generate an output. The output includes the key K (or more than one key). Said key K (or the more than one key) can be used as input to a cryptographic mechanism, providing a service to a security application. Examples of such services are encryption or decryption of content, or a challenge-response mechanism used to authenticate a receiver (e.g., for locking a software application to a receiver).

The cryptographic function in the sender and the receiver may be a hash function, or any function carrying the same behavior and properties as the exemplary hash functions described herein. In some embodiments, the hash function (also referred to as cryptographic function) has particular properties to ensure that the authenticity of the signature verification key associated with the sender is protected. While in this embodiment a hash function is used, any function having the desired properties may be used.

Possible implementations of the (cryptographic) function preferably have the following property: given an output K, it is hard (e.g., difficult, computationally difficult, infeasible or computationally infeasible) to find a key pair (SK*, SVK*) and a virtual key K** such that SVK* and K** map to K. In certain embodiments, "hard" may mean that an adversary may not be able to derive a key pair (SK*, SVK*) and a K**, such that SVK* and K** map to K, in polynomial time or space. In some embodiments, "hard" may be defined by specifying a lower bound on the number of operations or on the size of the memory required to find such values. As a third example, one may define "hard" by specifying an upper-bound on the probability that the property is not satisfied. The property ensures that the second security requirement is fulfilled, in the sense that it will be hard for an adversary to determine a key pair and a virtual key required to generate a key loading message for a given K.

In some embodiments, the key K may be used as input to a challenge-response mechanism for locking a software application to a receiver (or receivers). In those embodiments, the software application can send a challenge to the receiver, and receives a response to the challenge from the receiver. The software application includes a mechanism to verify the response received from the receiver, and will only provide its functionality if the response is as expected.

Security objectives are that it should be "difficult" for an adversary to (i) circumvent the challenge-response mechanism (e.g., by removing the mechanism from the software application), or (ii) build an emulator for generating the response to a challenge. To achieve these objectives, the sender may use software obfuscation techniques to make the software application (including the challenge-response verification mechanism) read-proof and tamper-resistant, producing an obfuscated program.

Lastly, the sender may generate a key loading message for any receiver that is authorized to execute that obfuscated program. Typically, the receivers are associated with a key pair generated during a personalization phase. Accordingly, the sender may generate a key loading message for a particular receiver using a key associated with that particular receiver. The key loading message and the signature verification key associated with the sender enable the receiver to derive K. Next, the receiver can use the derived K in the cryptographic mechanism to compute a response to a challenge. In general, the key loading message(s) and the signature verification key(s) enable the receiver to compute the correct responses to challenges received from the software application, that is, they authorize the receiver to execute the obfuscated program.

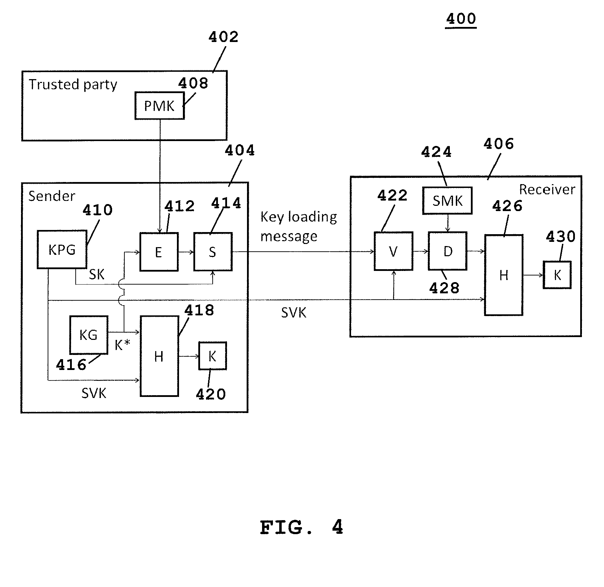

Various embodiments of the above described general system are described in further detail in relation to **FIGS 4-6****.**

**FIG. 4** shows an exemplary system for transporting a key from a sender to a receiver. System **400** includes trusted party **402,** sender **404** and receiver **406.** Although only one trusted party, one sender and one receiver is shown, it is appreciated that more than one trusted party, sender, or receiver may be used.

During the personalization phase of receiver **406,** trusted party **402** generates a key pair associated with a public-key cryptosystem independently for each receiver, such as receiver **406.** The key pair of a receiver comprises of a public master key PMK and a secret master key SMK, stored in elements **408** and **424,** respectively. The public master key PMK and the secret master key SMK may be referred to as the public key associated with the receiver and the secret key associated with the receiver, respectively. The associated public-key cryptosystem includes encryption algorithm E **412** and decryption algorithm D **428.** This public-key cryptosystem protects the confidentiality of a virtual key.

After the personalization phase, the secret master key SMK of the receiver (now stored in element **424**) is no longer needed by trusted party **402.** In other words, trusted party **402** can delete SMK. The use of public-key cryptography allows the trusted party to publish the PMK of every receiver. That is, only the authenticity of a PMK needs to be protected, and the contents of PMK element **408** are public.

To prevent an adversary from using the PMK to construct a key loading message that loads a given K into a compliant receiver, system **400** uses another key pair that is created by sender **404.** The key pair associated with sender **404** includes a signature verification key SVK and a signature key SK. This key pair is used in a cryptographic scheme comprising signature generation algorithm S **414** and signature verification algorithm V **422.** For such a scheme, either asymmetric or symmetric cryptographic techniques may be used. If an asymmetric scheme is used, then SVK is a public key, and SK is a secret key. If an asymmetric scheme is used, then SVK and SK are both secret keys. In addition, if one of the keys in the key pair (SK, SVK) of a symmetric scheme is known, then it is easy to derive the other key in the key pair.

If sender **404** wants to generate and distribute a key K to receiver **406** with an associated public key PMK (e.g., stored in element **408),** the sender first generates a key pair (SK, SVK) using key pair generator **410** (KPG), as depicted in **FIG. 4****.** Next, sender **404** generates a pseudo-random value K* (i.e., a virtual key) using key generator KG **416,** and derives the key K from K* and SVK using hash function H **418.** For example, the two inputs K* and SVK may be merged before applying the hash function. Said hash function H **418** may be implemented as part of a cryptographic module, and may be implemented as any suitable cryptographic function having the desired properties and behavior. The resulting key K may be stored in element **420.** In some embodiments, more than one key may be generated by hash function H **418** of the cryptographic module. In certain embodiments, sender **404** may store the key pair (SK, SVK) and/or the virtual key K* for future use. In such embodiments, the sender **404** may use the stored key pair (SK, SVK) and another (stored or generated) virtual key to derive another key K (or more than one key). Alternatively, the stored virtual key K* and another (stored or generated) key pair may be used to derive a key (or more than one key).

To construct the key loading message, the sender first encrypts K* using encryption algorithm E **412** and the PMK of the corresponding receiver, and signs the resulting ciphertext using signature algorithm S **414** and the signature key SK. Encryption algorithm E **412** and signature algorithm S **414** may be implemented as part of a security module for securing the virtual key to produce a secured virtual key. Signature algorithm S **414** may include computing an asymmetric digital signature or a symmetric MAC, and appending this value to the encrypted key. Alternatively, a signature scheme with message recovery may be used. The resulting key loading message is distributed to receiver **406,** and the message may be distributed together with the signature verification key SVK. The key loading message, said message including the secured virtual key, and/or the signature verification key may be transmitted by a communication module (not shown) in the sender. The communication module in sender **404** may be communicably connected to another communication module (not shown) in receiver **406** such that at least the key loading message and/or the signature verification key can be transmitted between sender **404** and the receiver **406.**

After receiving the key loading message and SVK, the receiver **406** verifies the authenticity of the secured virtual key included in the key loading message using signature verification algorithm V **422** and SVK. Next, the encrypted virtual key is decrypted using decryption algorithm D **428** and secret master key SMK **424.** Signature verification algorithm V **422** and decryption algorithm D **428** may be implemented as part of a security module in receiver **406** for deriving the virtual key from the secured virtual key in the key loading message.

Finally, hash function H **426** is applied to the result of the decryption and SVK. Hash function H **426** may be implemented as part of a cryptographic module. If the key loading message and the signature verification key are authentic, then the output of the hash function H will be equal to K. Said output K may be stored in element **430.** Hash function H **418** in sender **404** corresponds to hash function H **426** of receiver **406.**

In the example described above, and depicted in **FIG. 4****,** an asymmetric scheme is used for protecting the authenticity of a key loading message. If a symmetric scheme is used, then the confidentiality of SVK needs to be protected. Notice that the confidentiality of SVK when distributed to a receiver can be protected by encrypting SVK using encryption algorithm E **412** and the PMK associated with the receiver to produce {SVK}_{PMK}. After receiving this message, the receiver can retrieve SVK by decrypting the message, using decryption algorithm D **428** and secret master key SMK **424.** It is appreciated that other suitable mechanisms may be used to protect the confidentiality of SVK.

Hash function H **418** and hash function H **426** (also referred to as cryptographic functions) have particular properties to ensure that the authenticity of the signature verification key is protected. While in this embodiment a hash function is used, any suitable function having the desired properties can be used.

Possible implementations of the hash function H (e.g., hash function H **418** and hash function H **426**) preferably have the following property: given an output K, it is hard (e.g., difficult, computationally difficult, infeasible or computationally infeasible) to find a key pair (SK*, SVK*) and a virtual key K** such that SVK* and K** map to K. In certain embodiments, "hard" may mean that an adversary may not be able to derive a key pair (SK*, SVK*) and a K**, such that SVK* and K** map to K, in polynomial time or space. In some embodiments, "hard" may be defined by specifying a lower bound on the number of operations or on the size of the memory required to find such values. As a third example, one may define "hard" by specifying an upper-bound on the probability that the property is not satisfied. The property ensures that the second security requirement is fulfilled, in that it will be hard for an adversary to determine a signature key and a virtual key required to generate a key loading message and a signature verification key for a given K.

If an asymmetric cryptographic scheme is used to protect the authenticity of a key loading message, then an example of a function H with this property is the following: (1) merge the inputs K* and SVK to produce an intermediate result X, e.g., by appending the value of SVK to the value of K*, (2) apply a 2nd pre-image resistant hash function to the input X to produce the output K. To see that the preferred property holds for this example, observe that, given K and SVK, it will be hard for an adversary to determine an SVK* not equal to SVK, and a K** such that SVK* and K** map to K. To see this, assume that it is feasible for an adversary to generate such an SVK* and such a K**. Then, given the output K and the inputs SVK and K*, the same method can be applied to generate a second pre-image to the hash function, comprising of SVK* and K**, as SVK* is not equal to SVK. This implies that the hash function is not 2nd pre-image resistant, contradicting the assumption. As a result, the only option for the adversary is to determine a signature key corresponding to the public key associated with the sender, i.e., SVK, which is, by definition, infeasible for an asymmetric scheme.

If a symmetric scheme is used, then an example of a function H is the following: (1) apply a one-way function or a pre-image resistant hash function to the secret key SVK to produce an intermediate result X, (2) merge X and K* to produce an intermediate result Y, e.g., by appending the value of X to the value of K*, (3) apply a 2nd pre-image resistant hash function to the intermediate result Y to produce the output K. To see that the preferred property holds for this example, observe that, given K, an adversary will be able to determine at most one output (i.e., the intermediate result X) of the pre-image resistant hash function applied in Step (1) and one K** that map to the given K in Step (3). By definition, it is infeasible to find any input SVK* to the pre-image resistant hash function that maps to this given output X. Note that the implementation for the symmetric scheme may also be used in the asymmetric case, that is, one implementation of the function H can be used for both the symmetric case and the asymmetric case.

In addition, observe that in both examples, the (cryptographic) function H satisfies the desired property also in case the virtual key K*, and the output X of the pre-image resistant hash function in the symmetric case, are known (i.e., in case both inputs to the 2nd pre-image resistant hash function are known). This can be seen as follows: given an output K and the specified inputs to the 2nd pre-image resistant hash function, it is, by definition, infeasible to determine a second, different set of inputs to the 2nd pre-image resistant hash function that map to the given output K. If an asymmetric scheme is used, then this implies that the adversary cannot determine a signature verification key different from SVK that maps to the given K. The only option for the adversary is to determine a signature key associated with SVK, which is, by definition, infeasible for an asymmetric scheme. In the symmetric case, the adversary has exactly one output (i.e., the intermediate result X) of the pre-image resistant hash function.

By definition, it is infeasible to find an input SVK* to the pre-image resistant hash function that maps to the given output X.

If an asymmetric scheme is used to protect the authenticity of K*, as in **FIG. 4****,** and if hash function H **426** is a 2nd pre-image resistant hash function, then in the event that an adversary manages to compromise any number of receivers to obtain all key values (K*, K, SVK and a number of SMKs) and key processing details, it is computationally infeasible to create an input for any other compliant receiver that results in the appropriate K being loaded into the receiver. That is, the adversary requires knowledge of the secret signing key SK in order to create messages that load K into a compliant receiver. If a symmetric scheme is used to protect the authenticity of K*, then the level of security is reduced, in the sense that key loading messages can be created if the secret key SVK (or SK) is compromised (recall that, in a symmetric scheme, one of the keys in the key pair (SK, SVK) can be easily derived from the other key). In general, if an SK is compromised, then an adversary is able to construct key loading messages for keys that were derived using the associated SVK (assuming these derived keys are known to the adversary). In some embodiments, the key pair (SK, SVK) is uniquely generated for every derived key K, minimizing the impact of a security breach in which an SK is compromised.

If other senders are used in the system as shown in **FIG. 4****,** and if an adversary knows all secrets associated with the other senders, and/or if the adversary is one of the other senders, then the secrets known to the adversary cannot be used to compromise an SK (or SVK) generated by sender **404.** That is, in this scenario it will still be infeasible for the adversary to create an input for a compliant receiver that results in a given K (associated with sender **404**) being loaded into the receiver.

After the key K has been loaded into a receiver, it may be used as input to a cryptographic mechanism, providing a service to a security application. For example, it may be used as a symmetric key in a stream cipher or block cipher for encrypting and decrypting data transmitted from the sender to the receiver. Alternatively, K may be used as a seed to initialize a pseudo-random number generator, e.g., for generating a key pair of a public-key cipher. K may also be used as a key for a keyed hash function. In particular, the primitives mentioned in the examples above can be used as building blocks for a challenge-response protocol (e.g., K may be used in a challenge-response protocol to authenticate a receiver).

In some embodiments, the receiver is able to store more than one key K. These keys may be generated (or derived) using one or more virtual keys and one or more signature verification keys as input. In those embodiments, the stored keys may be associated with a single cryptographic mechanism (e.g., a content decryption mechanism or a challenge-response mechanism). In other embodiments, different keys may be associated with different mechanisms. For example, one stored key may used in a content decryption mechanism, and another stored key may be used as input to a challenge-response mechanism. Clearly, more than one decryption mechanism and/or more than one challenge-response mechanism may be implemented and used.

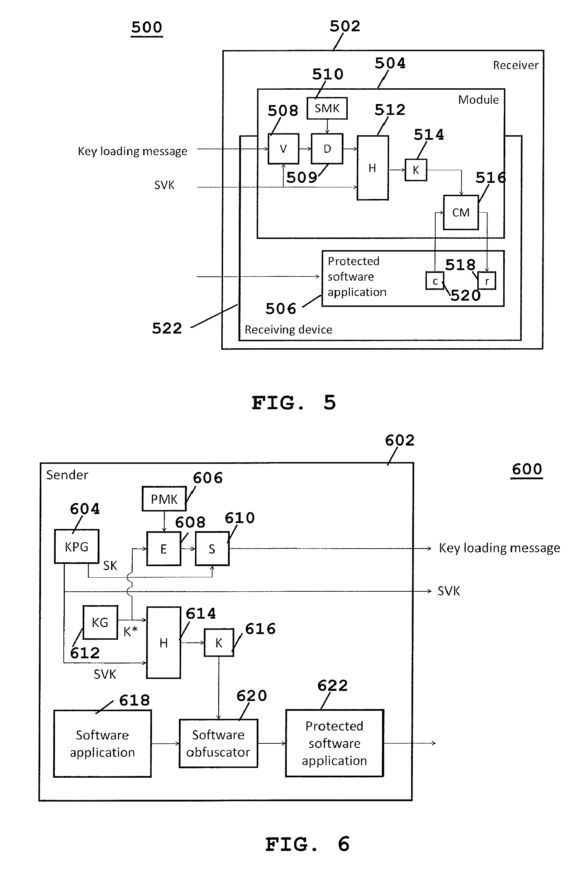

**FIG. 5** shows an exemplary receiver for use in receiving a key K from the sender, for use in a challenge-response protocol. **FIG. 6** shows an exemplary sender for transmitting K to a receiver. This illustrative embodiment relates to binding a software application to a receiver or set of receivers (also referred to as node-locking). Though, it is understood that the embodiment or a variant thereof may be used for other security/cryptographic applications. In this embodiment, a receiver includes a receiving device such as a personal computer, a mobile device, or a smart card device. A sender is a party that distributes software applications to receivers. The security objective in the systems **500** and **600** is that the software application is locked to a receiver or to a set of receivers, as specified by the sender (also referred to as an authorized receiver or a set of authorized receivers). That is, the software application shall not provide its functionality if executed by a receiving device of an unauthorized receiver.

An exemplary receiver security architecture is depicted in **FIG. 5****.** Typically, receiver system **500** includes receiver **502,** module **504,** receiving device **522,** and protected software application **506.** The implementation and properties of module **504** generally correspond to the implementation and properties of module **1** of receiver **2** (as described in relation to the networked system of **FIG. 3****).** Module **504** implements the receiver functionality of the key transport protocol, the protocol as described in relation to **FIG. 4****.** In a similar manner as receiver **406** of system **400** in **FIG. 4****,** module **504** receives a key loading message and/or a signature verification key from a sender. Module **504** of receiver **502,** receiving device **522,** or receiver **502** itself may include a communication module communicably connected to a sender for receiving the key loading message(s) and the signature verification key(s). After receiving the key loading message and the signature verification key SVK, module **504** of receiver **502** verifies the authenticity of the secured virtual key included in the key loading message using signature verification algorithm V **508** and SVK. Next, the encrypted virtual key is decrypted using decryption algorithm D **509** and secret master key SMK **510.** Signature verification algorithm V **508** and decryption algorithm D **509** may be implemented as part of a security module in module **504** of receiver **502** for deriving the virtual key from the secured virtual key in the key loading message.

Finally, hash function H **512,** or any suitable cryptographic function, is applied to the result of the decryption (i.e., the virtual key) and SVK. Hash function H **512** may be implemented as part of a cryptographic module. If the key loading message and the signature verification key are authentic, then the output of the hash function H will be equal to K. In some embodiments, more than one key may be generated by hash function H **512.** Said output K may be stored in element **514.** Hash function H **512** in receiver **502** substantially corresponds to a hash function H in the sender from which the key loading message came (e.g., hash function **614** of sender **602** in **FIG. 6**). The implementation and properties of hash function H **512** generally correspond to the implementation and properties of hash function H **426** of receiver **406** (as described in relation to system **400** of **FIG. 4**). Likewise, the hash function may be any suitable cryptographic function with the desired properties to protect the authenticity of the signature verification key.

Next, module **504** uses K as input to cryptographic mechanism CM **516** to generate a response (e.g., response **518)** to a challenge (e.g., challenge **520).** As shown in **FIG. 5****,** challenge c **520** is provided by protected software application **506.** In some embodiments, cryptographic mechanism CM **516** may encrypt (or decrypt) the challenge using the key K and a symmetric encryption algorithm to produce the response to the challenge, as part of an illustrative challenge-response mechanism. In other embodiments, cryptographic mechanism CM **516** may use K as a seed for a pseudo-random number generator, e.g., to generate a key pair of a public-key cryptosystem. One of these keys may subsequently be used in cryptographic mechanism CM **516** to encrypt (or decrypt) the challenge using the associated public-key cryptosystem to produce the response. In some other embodiments, cryptographic mechanism CM **516** may use K and the challenge as input to a keyed hash function to produce the response. In general, cryptographic mechanism CM **516** may be any cryptographic function or any combination of cryptographic functions that uses the key K and the challenge as input to produce the response. It is also understood that K may be used for other security/cryptographic applications.

In some embodiments, receiver **502** may store the key loading message and/or the signature verification key for future use. For example, the key loading message and/or the signature verification key may be stored inside non-volatile memory of receiving device **522** and/or inside non-volatile memory of module **504.**

Protected software application **506** is executed on receiving device **522.** Preferably, module **504** is communicably connected to protected software application **506** to send challenges (e.g., challenge **520**) to module **504** and to receive the associated responses (e.g., response **518**). To verify if the receiver is authorized to execute protected software application **506,** the protected software application includes a mechanism to verify the response received from module **504,** and will only provide its functionality if the response is as expected. If a response is invalid, the protected software application should implement relevant (corrective) security measures such as aborting its execution. Alternatively, the verification may also be implicit, in the sense that the desired functionality is not available if the response is not as expected.

In some embodiments, protected software application **506** may compute an expected response to the challenge, and compare the response received from module **504** to the expected response. In other embodiments, protected software application **506** may compute an expected challenge using the response received from module **504** as input (i.e., perform the "inverse" operation), and compare the challenge to the expected challenge. Instead of computing the expected response or the expected challenge, protected software application **506** may also compute and compare other data. For example, protected software application **506** may compute an intermediate result and an expected intermediate result of the challenge-response computation, and compare the two results. In some other embodiments, a list of challenge-response pairs may be included in protected software application **506.** In certain embodiments, the response received from module **504** may be an essential part of the functionality of the software application. For instance, the challenge may include encrypted content, and the response received from module **504** may include the corresponding plaintext content, to be rendered by receiving device **522.** It is appreciated that protected software application **506** may use any combination of these embodiments of the challenge-response verification mechanism.

In some embodiments, protected software application **506** may be stored inside receiving device **522** for future use, e.g., together with the key loading message and/or the signature verification key.

To fulfil the high-level security objective, it should be "difficult" for an adversary to (i) circumvent the challenge-response mechanism in protected software application **506** (e.g., by removing the mechanism from the application) or (ii) build an emulator for generating the response to a challenge (e.g., after a secret key is extracted from protected software application **506**). In some embodiments, software obfuscation techniques may be used to make the software application (including the challenge-response verification mechanism) read-proof and tamper-resistant.

In situations where more than one K is stored inside the module **504,** a parameter may be provided to module **504** to select which key and cryptographic mechanism to be used; in other words, to select the key and the service that is provided by module **504.** While protected software application **506** is shown, it is understood that other security/cryptographic applications may be used.

The security architecture for the sender is depicted as system **600** in **FIG. 6****.** If sender **602** wants to distribute a key K to a receiver (e.g., to receiver **502)** with an associated public key PMK (e.g., stored in element **606),** the sender first generates a key pair (SK, SVK) using key pair generator **604** (KPG), as depicted in **FIG. 6****.** Next, sender **602** generates a pseudo-random value K* (that is, a virtual key) using key generator KG **612,** and derives the key K (or more than one key) from K* and SVK using hash function H **614.** In some embodiments, sender **602** may store the key pair (SK, SVK) and/or the virtual key K* for future use. In such embodiments, sender **602** may use the stored key pair (SK, SVK) and another (stored or generated) virtual key to derive another key K (or more than one key). Alternatively, the stored virtual key K* and another (stored or generated) key pair may be used to derive a key (or more than one key).

The two inputs K* and SVK may be merged before applying the hash function. Said hash function H **614** may be implemented in a cryptographic module, and may correspond to a hash function H in the receiver to which the key loading message and/or the signature verification key is directed. Hash function H **614** may substantially correspond in behavior and properties to hash functions **418** and **426** (discussed at length in relation to system **400** of **FIG. 4**). Likewise, the hash function may be any suitable cryptographic function with the desired properties to protect the authenticity of the signature verification key. In some embodiments, more than one key may be generated by hash function H **614** of the cryptographic module. The resulting key K (or more than one resulting key) may be stored in element **616.**

To construct the key loading message, the sender first encrypts K* using encryption algorithm E **608** and the PMK of the corresponding receiver (as stored in element **606),** and signs the resulting ciphertext using signature algorithm S **610** and the signature key SK. Encryption algorithm E **608** and signature algorithm S **610** may be implemented as part of a security module for securing the virtual key to produce a secured virtual key (included in a key loading message). Signature algorithm S **610** may include computing an asymmetric digital signature or a symmetric MAC, and appending this value to the encrypted key. Alternatively, a signature scheme with message recovery may be used. The resulting key loading message and the signature verification key are distributed to the receiver to which PMK **606** corresponds. The key loading message may be distributed together with the signature verification key SVK.

The key loading message and the signature verification key may be transmitted by a communication module (not shown) in the sender **602.** The communication module in sender **602** may be communicably connected to another communication module (not shown) in the receiver to which PMK **606** corresponds, such that key loading messages and/or signature verification keys may be transmitted from the communication module of sender **602** to the communication module of the receiver.

As shown in **FIG. 6****,** (unprotected) software application **618** and the key K (stored in element **616**) are inputs to software obfuscator **620.** Software obfuscator **620** integrates a challenge-response verification mechanism into the software application, and makes the software application read-proof and tamper-resistant using obfuscation techniques. The output of the software obfuscator is protected software application **612,** capable of sending challenges, and only providing the desired functionality if the response is as expected. In this application of the key transport protocol, the key loading message and SVK can be seen as an activation code, enabling the associated receiving device to execute the corresponding software application. In certain embodiments, software obfuscator **620** may integrate more than one challenge-response mechanism in the software application (e.g., using more than one key as input).

In some embodiments, a different virtual key and/or different key pair associated with the sender may be used to produce (different) keys for protecting one or more software applications, or to produce different keys for protecting a single software application for different receivers. In certain embodiments, the key K may be used for protecting more than one software application. In other embodiments, sender **602** first generates key K **616** by providing the signature verification key associated with the sender and the virtual key K* to the cryptographic function (e.g., hash function H **614**). Second, sender **602** provides the generated key K **616** and software application **618** as inputs to software obfuscator **620** to create a single protected software application (e.g., protected software application **622**). The single protected software application is stored in sender **602** or any suitable storage medium (e.g., a remote server) such that the single protected software application may be later transmitted to other receivers. Alternatively, the protected software application may be published. If SVK is a public key, then SVK may be published also, e.g., together with the protected software application. The sender can securely store the triple (K*, SK, SVK), and the association with the software application. Lastly, using the stored triple (K*, SK, SVK) as input, sender **602** may generate key loading message(s) for any authorized receiver that wishes to execute that single protected software application. The sender can also securely store the identity of an authorized receiver with the triple (K*, SK, SVK) and the association with the software application, enabling the sender to generate a new key loading message (or more than one key loading message) for the authorized receiver at a later point in time. Typically, the receivers are associated with a key pair generated during a personalization phase. Accordingly, sender **602** may generate a key loading message for a particular receiver using a key associated with that particular receiver, using encryption algorithm E **608** and signature algorithm S **610.** In these embodiments, only a single protected software application needs to be generated, and different key loading messages may be generated for different receivers, thereby saving processing costs for generating protected software applications, and saving costs for storing or distributing protected software applications. As understood by one skilled in the art, this exemplary process may be used for other applications besides software obfuscation.

If an asymmetric scheme is used to protect the authenticity of K*, as in **FIGS. 5 and 6****,** and if the function H is a 2nd pre-image resistant hash function, then in the event that an adversary manages to compromise any number of receivers to obtain all key values (K*, K, SVK and a number of SMKs) and key processing details, it is computationally infeasible to create an activation code for any compliant receiver that results in an illegal execution of the protected software application on the compliant receiver. That is, the adversary requires knowledge of the secret signing key SK in order to create an activation code for an unauthorized compliant receiver. In particular, if other senders are used in the system, and if an adversary knows all secrets associated with the other senders, and/or if the adversary is one of the other senders, then the secrets known to the adversary cannot be used to compromise the secret signing key SK.

If the protected software application includes challenge-response pairs or the key K (e.g., used as a symmetric key in a cipher, or used as a key in a keyed hash function), then a threat is that an adversary extracts challenge-response pairs or the key K from the protected software application. Next, the adversary can build an emulator of the challenge-response mechanism to illegally execute the protected software application. A variant scheme can be used to address this threat. Instead of using K directly as a symmetric key, it can be used as a seed for a pseudo-random number generator to generate a public key pair. The secret key with an associated decryption algorithm can be used inside the module to generate responses to challenges received from the protected software application, and the public key with an associated encryption algorithm can be integrated in the protected software application to verify responses received from the module. An advantage of this variant implementation is that neither challenge-response pairs, nor a secret key (to generate responses to challenges) can be extracted from the protected software application.

While generic public-key cryptography modules (e.g., modules **412, 414, 422, 428, 508, 509, 608** and **610)** are described, it is understood that any other suitable cryptographic operations and infrastructure may be used as long as the authenticity and confidentiality of a key loading message are protected. As an example, the authenticity mechanism may use an asymmetric scheme in which both SK and SVK are secret keys. A well known example of such a system is RSA with a randomly selected encryption (or decryption) exponent, both of which are kept secret. If an authenticity mechanism is used in which SVK is a secret key, then preferably the SVK is transmitted in encrypted form to the receiver, e.g., using the public key associated with the receiver as an encryption key. It may also be possible to insert additional key layers to the methods and systems described in the present disclosure.

One embodiment of the invention may be implemented as a program product for use with a computer system. The program(s) of the program product define functions of the embodiments (including the methods described herein) and can be contained on a variety of computer-readable storage media. The computer-readable storage media can be a non-transitory storage medium. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory, flash memory) on which alterable information is stored.

It is to be understood that any feature described in relation to any one embodiment may be used alone, or in combination with other features described, and may also be used in combination with one or more features of any other of the embodiments, or any combination of any other of the embodiments. Moreover, the invention is not limited to the embodiments described above, which may be varied within the scope of the accompanying claims.

## Claims

1. A method for obtaining one or more keys in a receiver, said receiver communicably connected to a sender, said method comprising:
receiving a signature verification key associated with the sender and a key loading message from the sender at the receiver, wherein the key loading message includes a secured virtual key secured by the sender to protect authenticity and confidentiality of a virtual key;
obtaining the virtual key from the received secured virtual key using a secret key associated with the receiver and the signature verification key associated with the sender;
providing the virtual key and the signature verification key associated with the sender as inputs to a cryptographic function to produce a given output, the given output including the one or more keys; and
wherein the cryptographic function has the property that it is infeasible to determine another virtual key and a key pair including a signature key and a signature verification key associated with the signature key, such that the determined signature verification key and the other virtual key map to the given output of the cryptographic function, the given output including the one or more keys.

2. The method according to claim 1, wherein the secured virtual key comprises:
the virtual key secured by an encryption of the virtual key using a public key associated with the receiver and a signature of the virtual key using a signature key corresponding to the signature verification key associated with the sender, such that the secured virtual key is decryptable by the receiver using the secret key corresponding to the public key associated with the receiver and that the signature of the virtual key is verifiable by the receiver using the signature verification key associated with the sender.

3. The method according to any one of the preceding claims, further comprising providing at least part of the one or more keys for use in a challenge-response mechanism.

4. The method according to claim 3, further comprising using the challenge-response mechanism to activate a functionality associated with a software application, wherein:
at least part of the challenge-response mechanism is integrated with the software application.

5. The method according to claim 4, further comprising storing the received secured virtual key, the signature verification key associated with the sender and the software application in non-volatile memory of the receiver.

6. The method according to any of the preceding claims, wherein the secret key associated with the receiver is unique to the receiver.

7. A method for transporting one or more keys from a sender to a receiver, said receiver communicably connected to the sender, said method comprising:
determining a virtual key in the sender;
securing the virtual key to produce a secured virtual key using a public key associated with the receiver and a signature key associated with the sender such that authenticity and confidentiality of the virtual key are protected;
transmitting a signature verification key corresponding to the signature key associated with the sender and a key loading message from the sender to the receiver, wherein the key loading message includes the secured virtual key;
providing the virtual key and the signature verification key associated with the sender as inputs to a cryptographic function to produce a given output, the given output including the one or more keys; and
wherein the cryptographic function has the property that it is infeasible to determine another virtual key and a key pair including a signature key and a signature verification key associated with the signature key, such that the determined signature verification key and the other virtual key map to the given output of the cryptographic function, the given output including the one or more keys.

8. The method of claim 7, further comprising:
using at least part of the one or more keys to generate at least part of a challenge-response mechanism; and
integrating at least part of the challenge-response mechanism into a software application.

9. The method of claim 8, further comprising:
storing the signature key associated with the sender, the signature verification key corresponding to the signature key associated with the sender and the virtual key in non-volatile memory in the sender; and
associating the software application with the signature key associated with the sender, the signature verification key corresponding to the signature key associated with the sender and the virtual key.

10. The method of any of claims 7-9, wherein securing the virtual key comprises:
encrypting the virtual key with the public key associated with the receiver to produce an encrypted virtual key; and
signing the encrypted virtual key with the signature key associated with the sender to produce a signature;
wherein the encrypted virtual key is decryptable by the receiver using a secret key corresponding to the public key associated with the receiver and the signature is verifiable by the receiver using the signature verification key corresponding to the signature key associated with the sender.

11. A module for obtaining one or more keys in a receiver communicably connected to a sender, said module comprising:
a communication module configured to receive a signature verification key associated with the sender and a key loading message from the sender to the receiver, wherein the key loading message includes a secured virtual key secured by the sender to protect authenticity and confidentiality of a virtual key;
a security module configured to obtain the virtual key from the received secured virtual key using a secret key associated with the receiver and the signature verification key associated with the sender;
a cryptographic module configured to provide the virtual key and the signature verification key associated with the sender as inputs to a cryptographic function in the cryptographic module to produce a given output, the given output including the one or more keys; and
wherein the cryptographic function has the property that it is infeasible to determine another virtual key and a key pair including a signature key and a signature verification key associated with the signature key, such that the determined signature verification key and the other virtual key map to the given output of the cryptographic function, the given output including the one or more keys.

12. The module according to claim 11, wherein the module is implemented as part of a single integrated circuit.

13. A sender for enabling transport of one or more keys to a receiver, said receiver communicably connected to the sender, said sender comprising:
a key module configured to determine a virtual key;
a security module configured to secure the virtual key using a public key associated with the receiver and a signature key associated with the sender to produce a secured virtual key such that authenticity and confidentiality of the virtual key are protected;
a communication module configured to transmit a signature verification key corresponding to the signature key associated with the sender and a key loading message from the sender to the receiver, wherein the key loading message includes the secured virtual key; and
a cryptographic module configured to provide the virtual key and the signature verification key associated with the sender as inputs to a cryptographic function in the cryptographic module to produce a given output, the given output including the one or more keys; and
wherein the cryptographic function has the property that it is infeasible to determine another virtual key and a key pair including a signature key and a signature verification key associated with the signature key, such that the determined signature verification key and the other virtual key map to the given output of the cryptographic function, the given output including the one or more keys.

14. A key transport system comprising a module according to claim 11 or 12, said module communicably connected to a sender according to claim 13.

15. A computer program product, implemented on computer-readable non-transitory storage medium, transmitted from a sender to a receiver communicably connected to the sender, the computer program product, when being executed by a processor of the receiver, is adapted to carry out a challenge-response verification mechanism to activate a functionality associated with the computer program product;
wherein:
the receiver comprises a challenge-response generation mechanism capable of receiving a challenge and generating a response verifiable by the challenge-response verification mechanism in the computer program product;
the challenge-response generation mechanism in the receiver requires use of one or more keys;
the one or more keys are at least part of a given output from a cryptographic function in the receiver;
the cryptographic function has a virtual key and a signature verification key associated with the sender as inputs and has the property that it is infeasible to determine another virtual key and a key pair including a signature key and a signature verification key associated with the signature key, such that the determined signature verification key and the other virtual key map to the given output of the cryptographic function;
the virtual key is obtainable from a secured virtual key in a key loading message using a secret key associated with the receiver and the signature verification key associated with the sender.

16. The computer program product of claim 15, wherein the secured virtual key comprises:
the virtual key secured by an encryption of the virtual key using a public key associated with the receiver and a signature of the virtual key using a signature key corresponding to the signature verification key associated with the sender, such that the secured virtual key is decryptable by the receiver using the secret key corresponding to the public key associated with the receiver and that the signature of the virtual key is verifiable by the receiver using the signature verification key associated with the sender.
